# EUROPEAN PATENT SPECIFICATION

(11) **EP 2 474 604 B1**
(45) Date of publication and mention of the grant of the patent: **08.05.2013**
(21) Application number: 11196143.9
(22) Date of filing: 30.12.2011
(51) Int. Cl.: C12G 1/02, C12G 3/02

(54) **Method for making wine must and uses thereof**
Verfahren zur Herstellung von Weinmaische und deren Verwendung
Procédé de préparation de moût de vin et son utilisation

(30) Priority: 05.01.2011 IT MI20110005
(43) Date of publication of application: 11.07.2012
(73) Proprietor: Fattoria La Vialla Di Gianni, Antonio E Bandino Lo Franco - Societa' Agricola Semplice, 52100 Arezzo (IT)
(72) Inventor: LO FRANCO, Gianni, 52100 AREZZO (IT); LO FRANCO, Antonio, 52100 AREZZO (IT); LO FRANCO, Bandino, 52100 AREZZO (IT)
(74) Representative: Biggi, Cristina

(56) References cited:
- FR-A1- 2 767 533
- DIAZ CARLOS ET AL: "Conventional enological parameters of bottled wines from the Canary Islands (Spain).", JOURNAL OF FOOD COMPOSITION AND ANALYSIS, vol. 16, no. 1, February 2003 (2003-02), pages 49-56, XP002646204, ISSN: 0889-1575
- MUIR D D ET AL: "Formulating wine aperitifs containing cream", DAIRY INDUSTRIES INTERNATIONAL, XX, XX, vol. 51, no. 12, 1 January 1986 (1986-01-01), pages 24-25, XP009088594, ISSN: 0308-8197

## Description

The present invention relates to food products based on wine must, particularly alcoholic beverages obtained from wine must, and to methods for the preparation of such food products.

In the prior art, there are known beverages prepared starting from partially fermented wine must obtained from white or red grapes of various origin. The known beverages are normally obtained from the fermentation of grape of a single type of vine species, with the addition of carbon dioxide and preserving agents, such as sulphites.

Furthermore, the known beverages are subjected to a final filtration step before obtaining the final product ready for marketing.

Food products obtained starting from wine must are also known, the best known of which is balsamic vinegar.

FR2767533 describes sweet drinks having a low alcohol content, obtained from wine and characterized In that they have a content of polyphenolic compounds from wine of at least 1 g/L along with a total polyphenol index of at least 40, and a sugar content of 50-250 g/L of drink. Said drinks may also contain additional ingredients such as, one or more essential oils, one or more aqueous vegetable extracts, gum arabic, lactic acid and the like.

The present invention proposes a non-fizzy, preservative-free and unfiltered beverage, based on must obtained by partial fermentation of a particular mixture of Tuscan grapes, giving the final product an unusual, characteristic flavour. Moreover, as it is free of preservatives, the beverage is all-natural.

The invention also relates to other food products obtained starting from the partially fermented must of the invention, such as creams and sauces.

In addition, a further object of the invention is the procedure for the preparation of the partially fermented must utilized in the food preparations of the invention. The food products that obtainable starting from the must of the invention are proposed as a valid alternative to preparations already present on the market from which they differ in taste, the absence of added carbon dioxide and preservatives.

The present invention thus relates to a method for the preparation of a wine must-based beverage comprising the following steps:
a) preparing a grapes mixture containing 85% to 99% by weight of Sangiovese grapes, 0.5% to 5% by weight of Aleatico grapes and 0.5% to 15% by weight of Canaiolo grapes;
b) crushing and destemming the grapes to obtain a mixture of skins and juice;
c) adding to the mixture of skins and juice a pectolytic enzyme;
d) soaking the mixture of skins, juice and enzyme at a temperature of 5 °C-15 °C for a period of time of 1 day to 7 days;
e) racking an amount of liquid must, without skins, comprised from 20% to 40% by weight of the initial mixture mass;
f) fermenting the racked juice by addition of a yeast for the period of time required to achieve an alcoholic strength comprised from 5% vol. to 10% vol. of acquired alcohol;
g) finishing the fermentative process by bringing the mixture to a temperature comprised drom -5°C to 5°C.

The mixture of Tuscan grapes utilized in the method of the invention comprises preferably from 90% to 97% by weight of Sangiovese grapes, from 1% to 3% by weight of Aleatico grapes and from 2% to 7% by weight of Canaiolo grapes.

In a preferred embodiment of the invention, the grapes are collected and injected with solid oxygen dioxide (about -72 °C), prior to preparation of the grape mixture. This technique allows to keep the aromas of the grape intact by saturating the environment where the raw material remains during the processing, and to carry out a rapid cooling, thereby stopping the action of unwanted yeasts. In this manner, the addition of preservatives is avoided.

The pectolytic enzyme that is added at step b) to promote colour extraction is preferably "Uvazym Couleur" marketed by Enartis.

The enzyme is added in an amount comprised from 1 to 4 g/100 Kg of grape.

The enzyme is dissolved in water at a ratio ranging between 1:20 and 1:10, and added directly to the crushed grape mixture or to the grapes in a uniform manner, preferably during the stage when the tank is being filled or the stage of re-beating the mass.

During the soaking period, the mixture of skins and juice is re-beaten at least once to promote a uniform soaking and thus, a uniform extraction of the colour. Fermentation preferably occurs at a temperature comprised from 10 °C to 30 °C, preferably from 10 °C to 15 °C. The yeast serving for the fermentation is added to the soaked mass in an amount comprised from 10 to 50 g/hl, preferably from 15 to 40 g/hl.

In a preferred embodiment of the invention, once the fermentation is completed, the obtained juice is stored at temperatures comprised from -5 °C to 5 °C, for a period of time comprised from 15 days to 2 months, preferably from 20 days to 1 and a half month, to obtain the ripening thereof.

At the end of the ripening and partial clarification process, the juice is bottled without filtrations and additions of any additives or preserving agents.

The bottled product is preferably pasteurized to keep its features unchanged.

The present invention also relates to a beverage obtainable by the procedure hereinabove described, the beverage being a partially fermented wine juice (must). Said beverage has a low alcohol content, is red in colour, contains all of its protein parts, which is a sign of the naturalness of the procedure, is rich in the fruity aromas of red fruits (cherry, red currant, mulberry) and sweet-tasting. It can be used as a refreshing drink or to accompany desserts.

The beverage is obtained maintaining all of the organoleptic qualities of the grape without using preservatives (sulphites) and without the utilization of physical and/or chemical procedures, in order not to alter the quality thereof.

The beverage that can be obtained with the procedure of the invention is characterized by an alcoholic strength comprised from 4% vol. to 10% vol., preferably from 6% vol. to 8% vol.; an amount of sugars (expressed as the amount of glucose + fructose) comprised from 80 g/l to 100 g/l; a total acidity, expressed as tartaric acid, comprised from 4 g/l to 7 g/l; an amount of polyphenols comprised from 1200 to 2000 mg/l, preferably from 1400 to 1800 mg/l; an anthocyan content comprised from 200 mg/l to 450 mg/l.

In addition to its use for the preparation of the beverage described hereinabove, the must obtained with the method of the invention can also be utilized as an ingredient in other food preparations, for example hazelnut creams and tomato sauces. In this case, the must is preferably utilized as an ingredient in an amount of 15% to 30% by weight.

### EXAMPLE OF THE PREPARATION OF A WINE MUST-BASED BEVERAGE

The selective harvesting of perfectly healthy grapes of the Sangiovese Toscano Variety is performed, followed by with the preparation of a mixture of grapes containing 96% of Sangiovese grapes, 1.5% of Aleatico grapes and 2.5% of Canaiolo grapes.

The grapes are dropped into a grape-receiving tank and solid carbon dioxide (-72 °C) is injected onto the grape.

The grapes are then crushed and destemmed, and the crushed grape mixture (juice and skins) is conveyed into the soaking tank, where the mass is cooled to 10° C.

The enzyme "Uvazym Couleur" is then added to the mass to promote colour extraction from the skins.

In the next three days, the temperature conditions are maintained, re-beating the mass to permit colour extraction from the skins.

On the fourth day, one proceeds with the racking (bleeding off) of the liquid must (free of skins) in an amount equal to 35% of the initial mass, transferring the juice into a fermentation vat.

The juice obtained is conditioned at 15 °C and the alcoholic fermentation is started by the Saccharomyces Bayanus yeast.

When an alcoholic strength of 7.2% vol. of acquired alcohol is achieved, the juice is transferred and conditioned at 0 °C to stop the fermentative process. The thus obtained juice is stored at low temperatures for about thirty days.

At the end of the ripening and partial clarification process, it is bottled without filtrations and additions of any additives or preserving agents.

The bottled product is then pasteurized to keep its properties unchanged.

### ANALYSIS OF THE BEVERAGE

Alcoholic Strength by Distillation % vol.: 7.23
Sugars (glucose + fructose) g/l: 95.00
pH 3.32
Total Acidity in Tartaric Acid g/l: 5.64
Net Volatile Acidity in Acetic Acid g/l: 0.25
Free Sulphur Dioxide mg/l: 0
Total Sulphur Dioxide (distillation method) mg/l: 8
Overpressure atm/20 °C: 0.8
L-Malic Acid g/l: 1.200
Total polyphenols mg/l: 1.500
Free anthocyans mg/l: 350

## Claims

1. A method for preparing wine must comprising the steps of:
a) preparing a grapes mixture containing 85% to 99% by weight of Sangiovese grapes, 0.5% to 5% by weight of Aleatico grapes and 0.5% to 15% by weight of Canaiolo grapes;
b) crushing and destemming the grapes to obtain a mixture of skins and juice;
c) adding to the mixture of skins and juice a pectolytic enzyme;
d) soaking the mixture of skins, juice and enzyme at a temperature of 5 °C-15 °C for a period of time of 1 day to 7 days;
e) racking an amount of liquid must, without skins, comprised from 20% to 40% by weight of the initial mixture mass;
f) fermenting the racked juice by addition of a yeast for the period of time required to achieve an alcoholic strength comprised from 5% vol, to 10% vol. of acquired alcohol;
g) finishing the fermentative process by bringing the mixture to a temperature comprised from -5 °C to 5 °C.

2. The method according to claim 1, wherein said grape mixture comprises from 90% to 97% by weight of Sangiovese grapes, from 1% to 3% by weight of Aleatico grapes and from 2% to 7% by weight of Canaiolo grapes.

3. The method according to any one of the claims 1 to 2, wherein said enzyme is added in an amount comprised from 1 to 4 g/100 kg of grape.

4. The method according to any one of the claims 1 to 3, wherein during the soaking period, the mixture of skins and juice is re-beaten at least once.

5. The method according to any one of the claims 1 to 4, wherein said yeast is Saccharomyces Bayanus.

6. The method according to any one of the claims 1 to 5, wherein said yeast is added to the soaked mass in an amount comprised from 10 to 50 g/hl, preferably from 15 to 40 g/hl.

7. The method according to any one of the claims 1 to 6, wherein said fermentation occurs at a temperature comprised from 10 °C to 30 °C, preferably from 10 °C to 15 °C.

8. The method according to any one of the claims 1 to 7, further comprising a step of storing the juice obtained from fermentation at temperatures comprised from -5 °C to 5 °C, for a time comprised from 15 days to 2 months, preferably from 20 days to 1 and a half months, to obtain the ripening thereof.

9. The method according to claim 8, further comprising a step of bottling said juice without filtrations and additions of any additives or preserving agents.

10. The method according to claim 9, wherein said bottled juice is pasteurized to keep its properties unchanged.

11. A wine must obtainable by the method according to any one of the claims 1 to 10, **characterized by** an alcoholic strength comprised from 4% vol. to 10% vol., preferably from 6% vol. to 8% vol.; an amount of sugars comprised from 80 g/l to 100 g/l; a total acidity, expressed as tartaric acid, comprised from 4g/l to 7g/l; an amount of polyphenols comprised from 1200 to 2000 mg/l, preferably from 1400 to 1800 mg/l; an anthocyan content comprised from 200 mg/l to 450 mg/l.

12. Use of the wine must according to claim 11 as a non-fizzy and alcoholic, refreshing drink, or as an ingredient in food preparations, preferably hazelnut creams and tomato sauces such as ketchup.

13. Use according to claim 12, wherein said ingredient is used in an amount comprised from 15% to 30% by weight.

## Patentansprüche

1. Verfahren zur Herstellung von Weinmaische, umfassend die folgenden Schritte:
a) Herstellung eines Traubengemisches, enthaltend 85 bis 99 Gew.-% Sangiovese-Trauben, 0,5 bis 5 Gew.-% Aleatico-Trauben und 0,5 bis 15 Gew.-% Canaiolo-Trauben;
b) Keltern und Abbeeren der Trauben zum Erhalt eines Gemisches aus Schalen und Saft;
c) Hinzufügen eines pektolytischen Enzyms zum Gemisch aus Schalen und Saft;
d) Einweichen des Gemisches aus Schalen, Saft und Enzym bei einer Temperatur zwischen 5 °C und 15 °C für einen Zeitraum von 1 Tag bis 7 Tagen;
e) Abstechen einer Menge flüssigen Mosts ohne Schalen zwischen 20 und 40 Ges.-% der anfänglichen Masse des Gemisches;
f) Fermentieren des abgestochenen Safts unter Hinzugabe einer Hefe für den Zeitraum, der notwendig ist, um eine alkoholische Stärke zwischen 5 Vol.-% und 10 Vol.-% vorhandenen Alkohols zu erreichen;
g) Fertigstellen des fermentativen Verfahrens durch Bringen der Temperatur des Gemisches auf -5 °C bis 5 °C.

2. Verfahren nach Anspruch 1, wobei das Traubengemisch 90 bis 97 Ges.-% Sangiovese-Trauben, 1 bis 3 Gew.-% Aleatico-Trauben und 2 bis 7 Ges.-% Canaiolo-Trauben umfasst.

3. Verfahren nach einem der Ansprüche 1 bis 2, wobei das Enzym in einer Menge von 1 bis 4 g/100 kg Trauben hinzugefügt wird.

4. Verfahren nach einem der Ansprüche 1 bis 3, wobei das Gemisch aus Schalen und Saft während des Einweichzeitraums mindestens ein Mal durchgerührt wird.

5. Verfahren nach einem der Ansprüche 1 bis 4, wobei es sich bei der Hefe um Saccharomyces bayanus handelt.

6. Verfahren nach einem der Ansprüche 1 bis 5, wobei die Hefe zur eingeweichten Masse in einer Menge von 10 bis 50 g/hl, vorzugsweise von 15 bis 40 g/hl hinzugefügt wird.

7. Verfahren nach einem der Ansprüche 1 bis 6, wobei die Fermentierung bei einer Temperatur zwischen 10 °C und 30 °C, vorzugsweise zwischen 10 °C und 15 °C stattfindet.

8. Verfahren nach einem der Ansprüche 1 bis 7, ferner umfassend einen Schritt des Lagerns des durch die Fermentierung erhaltenen Safts bei Temperaturen zwischen -5 °C und 5 °C für einen Zeitraum zwischen 15 Tagen und 2 Monaten, vorzugsweise zwischen 20 Tagen und eineinhalb Monaten zum Erhalt des Reifens davon.

9. Verfahren nach Anspruch 8, ferner umfassend einen Schritt des Abfüllens des Safts ohne Filtrationen und Hinzugaben von Zusatzstoffen oder Konservierungsstoffen.

10. Verfahren nach Anspruch 9, wobei der abgefüllte Saft pasteurisiert wird, damit seine Eigenschaften unverändert bleiben.

11. Weinmaische, erhaltbar durch das Verfahren nach einem der Ansprüche 1 bis 10, **gekennzeichnet durch** eine alkoholische Stärke zwischen 4 Vol.-% und 10 Vol.-%, vorzugsweise zwischen 6 Vol.-% und 8 Vol.-%; eine Menge von Zuckern zwischen 80 g/l und 100 g/l; eine Gesamtsäure, angegeben als Weinsäure, zwischen 4 g/l und 7 g/l; eine Menge von Polyphenolen zwischen 1200 und 2000 mg/l, vorzugsweise zwischen 1400 und 1800 mg/l; einen Anthocyan-Gehalt zwischen 200 mg/l und 450 mg/l.

12. Verwendung der Weinmaische nach Anspruch 11 als ein nicht-kohlensäurehaltiges und alkoholisches Erfrischungsgetränk oder als eine Zutat in Lebensmittelzubereitungen, vorzugsweise Haselnusscremes und Tomatensaucen, wie z. B. Ketchup.

13. Verwendung nach Anspruch 12, wobei die Zutat in einer Menge zwischen 15 und 30 Gew.-% verwendet wird.

## Revendications

1. Procédé de préparation du moût de vin comprenant les étapes de :
a) préparer un mélange de raisins contenant de 85% à 99% en poids de raisins Sangiovese, de 0,5% à 5% en poids de raisins Aleatico, et de 0,5% à 15% en poids de raisins Canaiolo ;
b) écraser et dégrapper les raisins pour obtenir un mélange de peaux et de jus ;
c) ajouter au mélange de peaux et jus une enzyme pectolytique ;
d) laisser macérer le mélange de peaux, jus et enzyme à une température de 5°C-15°C pendant une durée de 1 à 7 jours ;
e) soutirer une quantité de moût liquide, sans peaux, comprise entre 20% et 40% en poids de la masse initiale du mélange ;
f) laisser fermenter le jus soutiré en ajoutant une levure pendant la durée nécessaire pour obtenir un degré alcoolique entre 5% vol. et 10% vol. d'alcool acquis ;
g) terminer le processus de fermentation en amenant le mélange à une température comprise entre -5°C et 5°C.

2. Procédé selon la revendication 1, **caractérisé en ce que** ledit mélange de raisins contient de 90% à 97% en poids de raisins Sangiovese, de 1% à 3% en poids de raisins Aleatico, et de 2% à 7% en poids de raisins Canaiolo.

3. Procédé selon l'une quelconque des revendications 1 à 2, **caractérisé en ce que** ladite enzyme est ajoutée dans une quantité comprise entre 1 et 4 g/100 kg de raisins.

4. Procédé selon l'une quelconque des revendications 1 à 3, **caractérisé en ce que**, pendant la période de macération, le mélange de peaux et jus est rebattu au moins une fois.

5. Procédé selon l'une quelconque des revendications 1 à 4, **caractérisé en ce que** ladite levure est Saccharomyces bayanus.

6. Procédé selon l'une quelconque des revendications 1 à 5, **caractérisé en ce que** ladite levure est ajoutée à la masse macérée dans une quantité comprise entre 10 et 50 g/hl, de préférence entre 15 et 40 g/hl.

7. Procédé selon l'une quelconque des revendications 1 à 6, **caractérisé en ce que** ladite fermentation se produit à une température comprise entre 10°C et 30°C, de préférence entre 10°C et 15°C.

8. Procédé selon l'une quelconque des revendications 1 à 7, comprenant également une étape de stockage du jus obtenu avec la fermentation, à des températures comprises entre -5°C et 5°C, pendant une durée comprise entre 15 jours et 2 mois, de préférence entre 20 jours et 1 mois et demi, en vue de sa maturation.

9. Procédé selon la revendication 8, comprenant aussi une étape de mise en bouteille dudit jus sans filtration ni addition d'additifs ou de conservateurs.

10. Procédé selon la revendication 9, **caractérisé en ce que** ledit jus mis en bouteille est pasteurisé pour conserver ses propriétés.

11. Moût de vin pouvant être obtenu par le procédé selon l'une quelconque des revendications 1 à 10, **caractérisé par** un degré alcoolique compris entre 4% vol. et 10% vol., de préférence entre 6% vol. et 8% vol. ; par une quantité de sucres comprise entre 80 g/l et 100 g/l ; par une acidité totale, exprimée en acide tartrique, comprise entre 4 g/l et 7 g/l ; par une quantité de polyphénols comprise entre 1200 et 2000 mg/l, de préférence entre 1400 et 1800 mg/l ; par une teneur en anthocyanes comprise entre 200 mg/l et 450 mg/l.

12. Utilisation du moût de vin selon la revendication 11 comme une boisson rafraîchissante, alcoolique et non pétillante, ou comme un ingrédient dans les préparations alimentaires, de préférence des crèmes de noisettes et des sauces tomates, comme le ketchup.

13. Utilisation selon la revendication 12, **caractérisée en ce que** ledit ingrédient est employé dans une quantité comprise entre 15% et 30% en poids.
